# EUROPEAN PATENT SPECIFICATION

(11) **EP 2 512 105 B1**
(45) Date of publication and mention of the grant of the patent: **20.09.2017**
(21) Application number: 12164110.4
(22) Date of filing: 13.04.2012
(51) Int. Cl.: H04L 29/08, H04L 29/12, H04L 29/06, H04L 12/24

(54) **NETWORK TRAFFIC ENGINEERING**
NETZWERKVERKEHRSTECHNIK
INGÉNIERIE DE TRAFIC DE RÉSEAU

(30) Priority: 15.04.2011 EP 11162602
(43) Date of publication of application: 17.10.2012
(73) Proprietor: Deutsche Telekom AG, 53113 Bonn (DE)
(72) Inventor: Frank, Benjamin, 12555 Berlin (DE); Smaragdakis, Georgios, 14052 Berlin (DE); Poese, Ingmar, 10553 Berlin (DE); Feldmann, Anja, 10717 Berlin (DE); Uhlig, Steve, 10965 Berlin (DE)
(74) Representative: Vossius & Partner Patentanwälte Rechtsanwälte mbB

(56) References cited:
- EP-A1- 1 865 684
- WO-A2-02/35799
- US-A1- 2003 174 648
- US-A1- 2008 092 058
- US-A1- 2010 153 802
- AWDUCHE MOVAZ NETWORKS A CHIU CELION NETWORKS A ELWALID I WIDJAJA LUCENT TECHNOLOGIES X XIAO REDBACK NETWORKS D: "Overview and Principles of Internet Traffic Engineering; rfc3272.txt", IETF STANDARD, INTERNET ENGINEERING TASK FORCE, IETF, CH, 1 May 2002 (2002-05-01), XP015009050, ISSN: 0000-0003

## Description

### Technical Field

The present invention relates to a method according to the preamble of independent claim 1 and more particularly to a computer program for implementing such a method. Such methods comprising controlling traffic flow through the network being optimized based on routing control and configuration by evaluating interior gateway protocol weights, label switch paths within multiprotocol label switching and/or border gateway protocol properties, can be used for engineering traffic within a network. More particularly the present invention also relates to a computer program for implementing such a method.

### Background Art

As, e.g., described in [Awduche et. al.: "Overview and Principles of Internet Traffic Engineering". The Internet Society, Movaz Networks et al.. May 2002], network traffic engineering typically is focussed to controlling and optimizing of the routing function in order to steering traffic through the network in the most effective way. Thereby, traffic engineering usually changes the flow of the traffic inside an internet service provider (ISP) network by tweaking the routing configuration, e.g., by changing interior gateway protocol (IGP) weights, multiprotocol label switching (MPLS) label switch paths (LSP), or border gateway protocol (BGP) as, e.g., described in [Fortz et. al.: "Internet Traffic Engineering by Optimizing OSPF Weights". Institut de Statistique et de Recherche Opérationnelle de l'Université Libre de Bruxelles et al.. INFOCOM 2000] or in [Fortz et. al.: "Optimizing OSPF/IS-IS Weights in a Changing World". IEEE Journal on Selected Areas in Communications, Vol. 20, No. 4. May 2002]. For example, in EP 1 865 684 A1 a content distribution system for operation over a network including a content peering arrangement is shown. Therein, network traffic decision is based on routing that takes place in the network such that assignment of a user request to a server is dictated by server information from a content provider or distributor and anycast behaviour, i.e. routing configuration and IP. A similar system with regard thereto is shown in US 2010/153802 A1.

However, changing the routing configuration has to be done very carefully in order not to disturb the operation of the network. Changes in routing configuration may be slow, create problems in the routing of content, and not converge to the desirable network configuration. Routing configuration changes can be difficult to perform in relatively small time scale and per content provider, distributor or server.

Today, the source and availability of content servers or distributors as well as the population of content are at large not taken into consideration in traffic engineering. However, in order to improve network traffic engineering some content-aware approaches are described in the art. Thereby, content-aware traffic engineering changes the traffic demands and therefore offers a fundamentally different approach to traffic engineering. Content-aware traffic engineering relies on the observation that today most traffic is due to popular content which is served by a sophisticated infrastructure [Labovitz et. al.: "Internet Inter-Domain Traffic". SIGCOMM'10, New Delhi, IndiaI. August 30 - September 3, 2010]. Such infrastructures consist of many servers distributed throughout the network. In that way, content-aware traffic engineering can redirect traffic by influencing the server selection for popular content or other selected content by the network administrator in an online fashion.

Content-aware traffic engineering implies that network administrators are given the opportunity to influence where users are downloading content from. This is currently often left to the operator of a content delivery network (CDN) which usually uses the domain name system (DNS) for this purpose. As, e.g., described in [Pan et. al.: "An overview of DNS-based server selections in content distribution networks". Computer Networks 43 695-711, Elsevier. 2003], DNS allows applications to map individual users to specific content locations and has been used to make content delivery dynamic over time. Indeed, content delivery platforms utilize DNS for load balancing, to minimize their peering costs and to optimize user experience. However, they are unaware of network bottlenecks within the network, e.g., within an internet service provider (ISP).

Thus, two control loops interfere: network traffic engineering which tries to prevent network bottlenecks and server selection within the content delivery platform.

EP 1 865 684 A1 relates to a content distribution system for operation over a network including content peering arrangement. In particular, EP 1 865 684 A1 relates to the usage of border gateway protocol (BGP) routing the connection of clients to provide possible content distribution paths by redirection fabrics wherein the redirection fabrics account for client proximity.

Therefore, there is a need for a system or method allowing efficient network traffic engineering and content delivery via the network.

### Disclosure of the Invention

According to the invention this need is settled by a method as it is defined by the features of independent claim 1, and by a computer program as it is defined by the features of independent claim 14. Preferred embodiments are subject of the dependent claims.

In particular, the gist of the invention is as follows: A method of engineering traffic within a network comprises controlling traffic flow through the network being optimized by evaluating interior gateway protocol weights (IGP), label switch paths within multiprotocol label switching (MPLS) and/or border gateway protocol properties (BGP). Like this, the internal routing and the egress points of external subnets can be known to the system or within the method. For example, IGP can provide the internal routing, MPLS or any other internally used protocol can be required whenever it interferes with/modifies the internal routing as the internal routing path can be the crucial information to the system and BGP can be needed to know at which egress point an external subnet is attached and, thus, in combination with IGP yields the internal path for any external subnet. The method according to the invention further comprises obtaining an ingress point at which content enters the network and obtaining an egress point at which content exits the network wherein within the controlling of the traffic flow through the network requests for content are redirected to appropriate servers by considering the ingress point and the egress point.

Thereby, the method according to the invention can particularly be a computer implemented method. In the context of the invention, the term "network" can relate to an electronic data network or a computer network being a plurality of computers and devices interconnected by communication channels in order to facilitate communications among users of the computers and devices. Such a network can particularly allow sharing of resources and information among the users via the interconnected computers or devices. The network can particularly be the internet or parts thereof. In certain embodiments, the ingress point can be the network location where the traffic that, e.g. can be originated by a edge server, is injected in the network wherein the edge server can be located both geographical and physical apart from the ingress point and the ingress point for the same server can change over the time and when content provider or distributor operation or routing parameters are changed. Similarly, the egress point can be the network location where the traffic that exit the network, i.e. other than the edge server which can be located both geographical and physical apart from the egress point. Often, just by knowing the IP of the server it is not possible to judge if this is the right or appropriate server to assign a client or user such that the method according to the invention allows for enriching the network traffic decision and for improving controlling of the traffic flow within the network. Traffic engineering in this context can encompass the application of technology and scientific principles to the measurement, characterization, modelling and control of network or internet traffic. Routing in the context of the invention can relate to selecting paths within the network along which network traffic is to send wherein packet switching technology can be used. Content in this context can relate to any data such as resources or information to be transferred via the network. Traffic floe or flow in this context can relate to the connection established between servers that are operated by the content provider or content distributor and the network user within the network. Preferably, a plurality of ingress points and a plurality of egress points are obtained and considered within the method according to the invention. The ingress or egress point can, e.g., be achieved or obtained by interconnection with any other system that performs either flow monitoring or any system that performs deep packet inspection and is able to match the servers that are operated by the content provider or content distributor and the application for traffic that is sent or received by network users within the network.

The presented invention can relate to a method or system that performs traffic engineering using multiple network information sources within a network, content availability and content demand. It can particularly allow for a content aware traffic engineering within the network, e.g. because the egress point is chosen based on the hostname of a given request, which can change the traffic demands and, therefore, can offer a fundamentally different approach to known traffic engineering. It can relate to a method or system that takes into consideration network information from multiple sources, content availability and content demand. In particular, the presented method or system allows to perform traffic engineering that is content aware by evaluating ingress and egress points of the network as an additional network information source. More particular, e.g., routing control and configuration can be considered as given information and can be used to optimize the traffic flow within the network such that by selecting an appropriate server for a given request the flow of traffic inside the network can be optimized based on the collected information such as popularity, traffic and egress points for hostnames and the underlying routing, i.e., e.g., all operational information necessary for monitoring the network configuration within the network. Thus, the network state and routing configuration that can be known to a network operator the operation of the servers, the demand of the requested object, the network location of the servers and the path from the servers to the clients or users particularly the points where the traffic is injected or leaves the network can be used. E.g., by selecting the server and therefore influencing the path of traffic, an operator can choose the egress point that yields the most improvement for a given traffic engineering goal such as minimizing the maximum link utilization, minimum number of hops in the internal network or peering cost for certain egress points. Like this, content-aware traffic engineering, e.g. because the egress point is chosen based on the hostname of a given request, can change the traffic demands and therefore can offer a fundamentally different approach to traffic engineering which allows for an efficient network traffic engineering and content delivery via the network.

Controlling of the traffic flow through the network in accordance with the invention allows for basing the traffic flow decision not only on the routing that takes place in the network such as on anycast routing and assignment of user request to the server as this is dictated by the routing in the network. Rather it allows for complementarily to recommend or provide a server, i.e. the appropriate server that is not recommended by known methods for the same request in the same network. In particular, according to the invention a network wide optimization can be performed which can significantly improve traffic engineering, e.g., compared to optimizing individual requests within network traffic.

Furthermore, according to the invention it can be proposed to involve the network operators, e.g., the ISPs, in the server selection process via content-aware traffic engineering. By combining the knowledge of the content delivery platform and the network topology and operation, both the network operators as well as the end-users can benefit. This can be an advantageous direction for network operators towards re-gaining control of their traffic as well as for better negotiating peering agreements with content providers.

In accordance with the invention, a network wide optimization of controlling the traffic flow is possible. This can allow for significant improvement to the respective optimization of individual requests or configuring routing as known in the prior art. In particular, by collecting and considering or utilizing network information and operational characteristics server selection has not to be relied only on routing information that dictate client-server proximity.

Preferably, the method comprises obtaining location data about a location of a content server within or outside the network wherein the location data is considered when redirecting the requests for content within the controlling of the traffic flow through the network. In particular, the location data or proximity data can be considered when redirecting the requests for content within the controlling to achieve network wide objectives not being restricted to single requests' objectives. Thereby, the location data or proximity data can be related to a plurality of locations of a plurality of content servers within or outside the network. E.g., for each request a hostname can be resolved into an IP address. Based on the hostname all return IP addresses can build a set of locations where the request can be sent to. With the routing information, the relevant egress point can be found. This way, multiple locations (egress points) for each hostname can be collected and for each location the exact network path the traffic flows can be known, thus allowing to steer the traffic through the network in a desired way, e.g., minimizing maximum link utilization.

Like this, a further network information source can be used within network engineering. Thereby, the location data preferably comprises information about availability of the content server. Availability in this context can relate to the server that can deliver requested content even if this is not recommended by the content provider and distributor. According to the preferred method other sources of information can be used. Further thereby, the location data preferably comprises information about the content server exchanged with a other network being connected to the network. In this way, various network engineering goals can efficiently be achieved.

Preferably, the method comprises collecting popularity data about the popularity of content within the network wherein the popularity data is considered when redirecting the requests for content within the controlling of the traffic flow through the network. Popularity of content in this context can relate to a number of requests for certain content or to a demand for objects in different locations of the network. For example, popularity of certain content can be rated as high if a high number of requests is identified within the network. Or, e.g., the respective component (either at PoP for outgoing or Ingress for incoming) can collect for each connection request the hostname and thus has an up to date view of how many requests each observed domain has. The different egress points for a given domain can be collected as described above. Like this, a further network information source can be used within network engineering, e.g., by using an aggregated demand for content from different aggregated points in the network, e.g., at the router or PoP level. Thereby, the network preferably is divided in a plurality of sections wherein collecting popularity data about the popularity of content within the network comprises collecting popularity data about the popularity of content within the each section of the network. Like this, various network engineering goals can efficiently be achieved in an advantageous manner.

Preferably, the method comprises predefining selected nodes within the network and collecting traffic data at the selected nodes of the network, wherein the traffic data is considered when redirecting the requests for content within the controlling of the traffic flow through the network. The traffic data can relate to any network traffic statistics for links including load, delay, losses of packets, etc. that is reported by the router that the link is attached to. Like this, a change of routing can be prevented. Thereby, the traffic data preferably is collected for selected content. Further thereby, the traffic data preferably is collected according to a hierarchical structure, wherein components and elements preferably are aggregated when collecting the traffic data. In this way, network engineering goals can advantageously be achieved and efficiency can be increased.

Preferably, the method comprises querying utilization data about utilization of parts of the network, wherein the utilization data is considered when redirecting the requests for content within the controlling of the traffic flow through the network. The parts of the network can be equal to the sections of the network mentioned above. Like this, a further network information source can be used within network engineering. In particular, further network path characteristics can be collected which can be utilized to achieve network wide traffic engineering goals without changing routing.

Preferably, the method comprises selecting a subset of servers to deliver content wherein each of the subsets of servers is evaluated when redirecting the requests for content within the controlling of the traffic flow through the network. Thereby, it can be referred to the central collection and analysis of row and aggregated data collected in different places of the network in order to gain the full view of the network status and operation. The content can be delivered to the subset of the servers in order to distribute the content and making it available at plural strategically useful nodes. For example, the respective component (either at PoP for outgoing or Ingress for incoming) can collect for each connection reply the amount of transferred bytes and, thus, can have an up to date view of how many traffic each observed domain generates. The different egress points for a given domain can particularly be collected as described above. Thereby, preferred optimization results can be achieved by optimizing the biggest sources and destinations of traffic first. Thus, collecting traffic information at the biggest PoP/Ingress points and subsequently optimizing those hostnames that generate most traffic in those PoP/Ingress points can yield the best optimization potential.

Also, selecting the subset of servers preferably is performed by using materializable network aided redirection. In this context, network aided redirection can be materialized, e.g., by provider's domain name system (DNS). At this point, e.g., an educated redirection of the request to an appropriate server can be made due to the information about server location (egress point), popularty and/or traffic of the requested hostname and the available routing information. In this way, network engineering goals can advantageously be achieved and efficiency can be increased. In this context, it can particularly be referred to the interconnection with any system that provides network-aided redirection, i.e., the best servers to serve the request is recommended, given the state of the network, the location of the request and the requirements of the application. Thus, in this context network aided redirection can be materialized, i.e. brought into a physical realisation, e.g., by provider's domain name system (DNS), rather than an abstract concept. Like this, e.g., an educated redirection of the request to an appropriate server can be made due to the information about server location (egress point), popularty and/or traffic of the requested hostname and the available routing information.

Preferably, the method comprises providing a program interface for interaction with program components within the network. Like this, it can be referred to the interconnection of the decision component within the method according to the invention, i.e., e.g., implemented as network monitor and load balancer, with all the monitor components (Network map, DNS aggregator, Ingress statistics aggregator, PoP statistics aggregator) and non-network related components such as administrative control and external preference information. This allows for an efficient communication between the program components for network engineering within the network.

Another aspect of the invention relates to a computer program having code means being arranged to implement the method as described above when being executed. With such a computer program the method as well as its effects and benefits can efficiently and conveniently be implemented and distributed.

These and other aspects of the invention will be apparent from and elucidated with reference to the embodiment(s) described hereinafter.

### Brief Description of the Drawings

The method and the computer program according to the invention are described in more detail hereinbelow by way of an exemplary embodiment and with reference to the attached drawings, in which:
- Fig. 1,: henceforth also referred to as diagram D01, shows the general architecture of an embodiment of the invention;
- Fig. 2,: henceforth also referred to as diagram D02, shows shows a network monitor and load balancer component of the embodiment from Fig. 1;
- Fig. 3,: henceforth also referred to as diagram D03, shows an administrative control component of the embodiment from Fig. 1;
- Fig. 4,: henceforth also referred to as diagram D04, shows an ingress statistics aggregator component of the embodiment from Fig. 1;
- Fig. 5,: henceforth also referred to as diagram D03a, shows an ingress statistics collector from ingress routers as well as a scheduling mechanism for reporting statistics in the ingress routers of the embodiment from Fig. 1;
- Fig. 6,: henceforth also referred to as diagram D04, shows a point-of-present (PoP) statistics aggregator component of the embodiment from Fig. 1; and
- Fig. 7,: henceforth also referred to as diagram D04a, shows a PoP statistics collector from PoP routers as well as a scheduling mechanism for reporting statistics in the PoP routers of the embodiment from Fig. 1.

### Mode(s) for Carrying Out the Invention

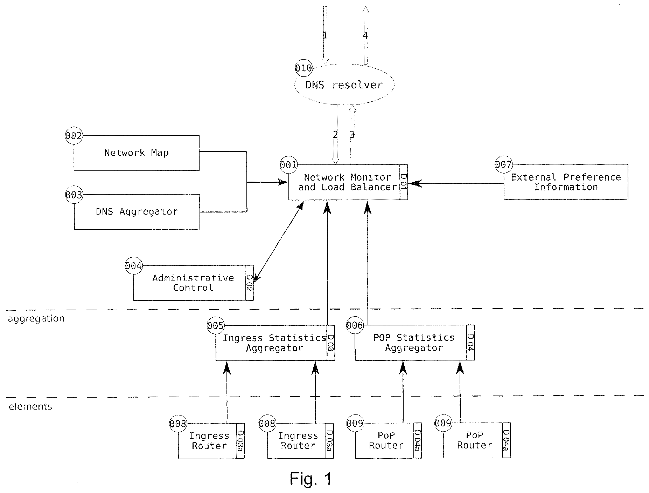

Fig. 1 or diagram D00 shows the general architecture of an embodiment of the method or system according to the invention. It shows the sources of network information, DNS meta-information and external preferences, as well as the hierarchical structure used in order to allow network elements such as routers to report statistics to aggregators that finally report to the main network monitor system. The network monitor system can be queried by the administrator of the network and also reports to the network administrator. The network monitor system is co-located with a load balancer system that can be programmed by the network administrator.

In particular, Fig. 1 shows the general architecture wherein the main component of the proposed method or system is a network monitor and load balancer component (001). The network monitor and load balancer component (001) is responsible for a number of tasks. First, it monitors the network operation by collecting input from different components, namely a network map component (002), a domain name system (DNS) aggregator (003), a ingress statistics aggregator component (005), a point-of-present (PoP) statistics aggregator component (006), and a external preference information component (007). Second, it executes load balancing tasks within the network based on content demand and content availability as well as the state of the network as reported by different components. Third, the load balancing tasks are defined and scheduled by an administrator of the network via a administrator control component (004). The network monitor and load balancer component (001) can be co-located with an internet service provider (ISP) DNS resolver (010) or it can communicate with one or more DNS resolvers. A detailed description of the network monitor and load balancer is provided in diagram D01.

Further, Fig. 1 shows the sources of network information namely the network map component (002) and the DNS aggregator (003). The network map component (002) provides network-related information, such as routing information, location of elements, location and addresses of the aggregators that report network activity, capacities of links, operational updates about elements and failures in the network, among others. The DNS aggregator (003) acts as a server discovery component. The DNS aggregator (003) keeps track of the DNS requests sent to the DNS resolver (010) and associates the replies with submitted requests. The DNS aggregator (003) also maps a request to the list of all the servers that can satisfy the submitted request.

The ingress statistics aggregator component (005) reports the ingress points that content enters the network. The ingress statistics aggregator component (005) collects and aggregates reports from network elements, namely the ingress routers (008) in the network in an active or a passive fashion. A detailed description of the operation of ingress statistics aggregator component is presented in diagram D03. A detailed description of the reporting operation of ingress router component is presented in diagram D03a. The PoP statistics aggregator component (006) reports the popularity of content in PoPs. The PoP statistics aggregator component (006) collects and aggregates reports from network elements, namely the PoP routers (009) in the network in an active or passive fashion. A detailed description of the operation of PoP statistics aggregator component is presented in diagram D04. A detailed description of the reporting operation of PoP router component is presented in diagram D04a.

The external preference information component (007) provides additional constraints set by content providers or other providers on the availability of content in deployed servers. The administrative control component (004) is the interface between the administrator of the network and the network monitor and load balancer component (001). The network administrator uses the administrator control component (004) to monitor the operation of the network monitor and load balancer component (001), to program the operation of the network monitor and load balancer component (001), and to receive reports about the state of the network and the popularity of the content in the network from the operation of the network monitor and load balancer component (001).

Fig. 1 also shows the flow of client request and response. Once a request arrives it is submitted by the client to the DNS resolver (010), see flow (1), it is checked if a reply is cached and in the resolver. If it is not cached then the authoritative resolver has to be contacted. If the reply is cached then the request is forwarded to the network monitor and load balancer component (001), see flow (2). The reply from the network monitor and load balancer component (001) is sent back to the DNS resolver (010), see flow (4). The DNS resolver (010) then sends back the reply to the client, see flow (4).

The following applies to the rest of this description. If, in order to clarify the drawings, a figure contains reference signs which are not explained in the directly associated part of the description, then it is referred to previous description sections. Also, if a part of the description contains reference signs which are not shown in the directly associated drawing it is referred to previous drawings and parts of the description associated thereto.

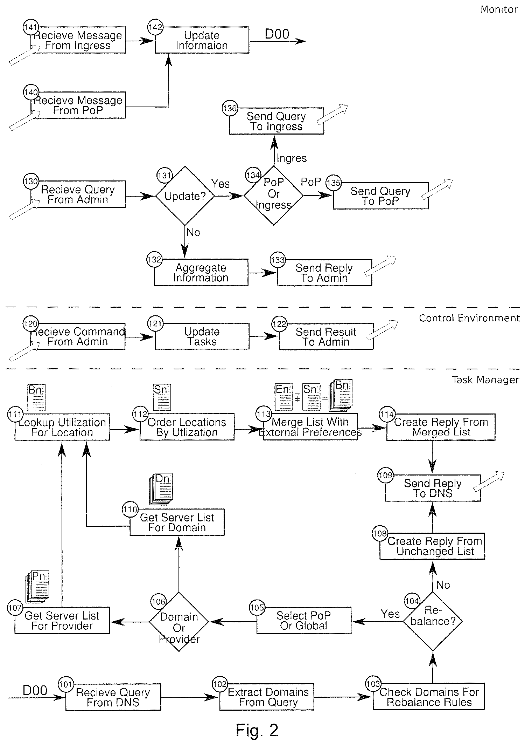

Fig. 2 or diagram D01 shows the network monitor and load balancer component (001) of the method or system. It also shows in more detail the monitor, control environment and task manager components. In particular, it shows the flow of selection methods inside the network monitor and load balancer component (001) wherein the flow of selection methods for three discrete operations within the network monitor and load balancer component (001) are shown, namely the monitor operation, the control operation and the task manager operation. In the monitor operation, once a message is received from the ingress statistics aggregator component (005) in the network monitor and load balancer interface (141) or a message is received from the PoP aggregator component in the network monitor and load balancer interface (140) then the view of the network or the popularity of the content is updated respectively in the update information component (142). In the monitor operation, once a query is received from the administrative control component (004) in the network monitor and load balancer interface (130), it is first checked if this query is an update request query (131). If the query is not an update request query but it is a retrieve request query, then a reply is compiled with the aggregated information (132) and the reply is send back to the administrative control (133). If the query is an update request query, then it is checked if it is ingress or a PoP update request query (134). If it is an ingress update request query then the answer is sent to the ingress statistics aggregator component (136). If it is a PoP update request query it is sent to the PoP statistics aggregator component (135). The updated views from the aggregators can be retrieved by the administrator when he submits a retrieve query. In the control operation, once a administrative command is received from the administrative control component in the network monitor and load balancer interface (120), the list of tasks in the network monitor and load balancer component is updated (121), and the results as well as a confirmation is sent back to the administrator (122).

In the task management operation, rules of load balancing have to be retrieved and applied. Once a query from the DNS resolver in the interface with the network monitor and load balancer (101), the domains are extracted from the query (102) and then the rebalancing rules for these domains are retrieved (103). Then it is checked if rebalance has to take place (104). If no rebalance has to take place, then a reply is generated without changing the submitted candidate list (108) and a reply is sent back to the DNS resolver (109). If a rebalance has to take place, then the PoPs involved are extracted (105). It is then checked if the query about the content is for a domain or for a provider (106). If it is for a domain then the list of candidate servers are extracted (110), if it is for a provider then the list of candidate servers (107). The list is then mapped to the network location where the above mentioned servers are located and the network utilization in the locations is extracted (111). Then these locations are ordered in descend network utilization order (112). External preference list for the network locations or the content is taken also into consideration (113) before the reply is generated (114) and sent back to the DNS resolver (109).

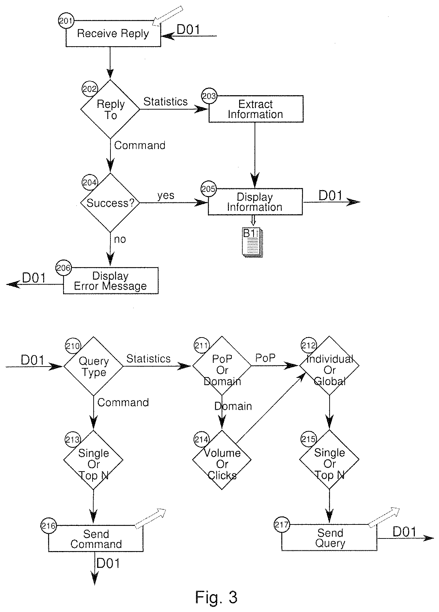

Fig. 3 or diagram D02 shows the administrative control component and also how administrative queries and commands are submitted to the network monitor and load balancer (001) as well as how replies and reports are received. In particular, Fig. 3 shows the flow of selection in the administrative control component. The top of the figure shows the flow of selection in the administrative control when a reply is received. The bottom of Fig. 3 shows the flow of selection in the administrative control when a query for statistics or a command is submitted to the network monitor and load balancer (001). When a reply is received in the interface between the administrative control component by the network monitor and load balancer (201), it is checked if this reply is a statistics or a command reply (202). If the reply is a statistics reply, the information is extracted (203) and displayed in the terminal (205). If it is a command reply, it is checked if the reply was successful (204). If it was not then a error message is displayed (206). If a command was successful, then the confirmation is displayed in the terminal (205).

When a command by the administrator is submitted, first it is checked if the query is a statistics query or a command query (210). If the query is a command, then it is first checked if the command is for a single domain or PoP, or it is about the most popular domains or PoPs (213), and then command is scheduled and sent to the network monitor and load balancer component (216). If the command is a statistics query, then it is checked if the command is about a domain or the popularity of content in a PoP (211). If the command is about a domain, then it is checked if the query is about the volume that a domain is responsible for or the number of visits that the domain receives (214), and if the query is for an individual PoP or the whole network (212). Then it is checked if the query is for one domain or for the most popular content (215). Then the query is created and sent to the network monitor and load balancer (217). If the statistics query is for PoPs, it is first checked if it is for an individual PoP or the whole network (212), and then if it for a domain or the most popular set of domains (215). Then the query is created and sent to the network monitor and load balancer

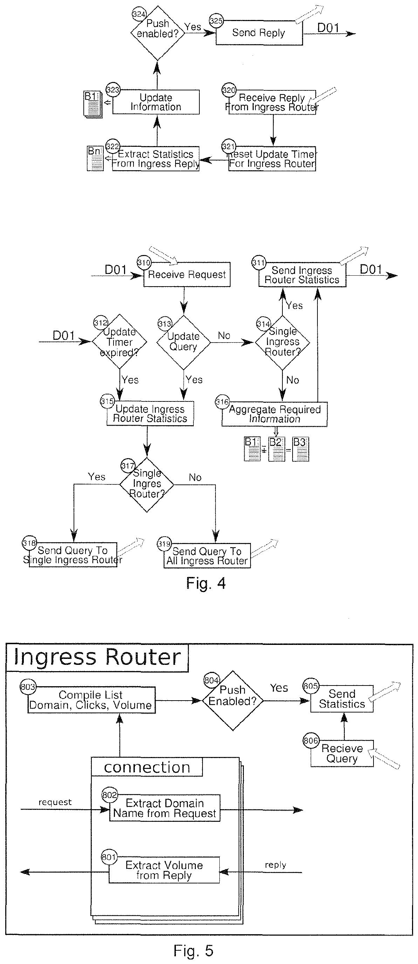

Fig. 4 or diagram D03 shows the ingress statistics aggregator component (005) that is responsible for receiving queries from the network monitor as well as reporting to the network monitor. It also shows how queries are sent to ingress routers and how the replies from ingress routers are received. In particular, Fig. 4 shows the flow of selections in the ingress statistics aggregator component (005) wherein at the top, it is shown the flow of selections when a reply is received from an ingress router. At the bottom of Fig. 4 it the flow of selections when a request is received in the ingress statistics aggregator (005) from the network monitor and load balancer (001) is shown. When a reply from an ingress router is received in the interface with the ingress statistics aggregator (320), the update timer for the ingress router is reset (321). Then, the statistics from an ingress router reply are extracted (322) and the monitor information about the ingress router is updated (323). Then it is checked if the report push of updates is enabled (324), and if so then the reply is sent to the network monitor and load balancer (325).

When a request is received in the ingress statistics aggregator in the interfaces with the network monitor and load balancer (310), it is checked if the query is an update (313). If it is not an update then it is checked if the request is for a single Ingress Router (314). If it is for a single Ingress router then the statistics are sent to the network monitor and load balancer (311). If the request is not for a single router then the required information is aggregated (316), and Ingress Router Statistics are sent to the network monitor and load balancer (311). If the query is an updated one, then the ingress router statistics are updated (315). For this it is checked if the request is for a single ingress router (317). If it is for a single ingress router then the request is sent to this ingress router (318), or if it is foe all the ingress routers then it is sent to all of them (319). Periodically it is always checked if the update timer has expired (312), and if so then the ingress router statistics are updated.

Fig. 5 or diagram D03a shows the ingress statistics collector from the ingress routers (008) as well as the scheduling mechanism for reporting statistics in the ingress router (008). In particular, it shows the flow of selections in the ingress router element. When a request about content is received in the ingress router (802) the domain name is extracted from the request and also the number of visits that is associated with this domain is updated (802). From the replies, it is monitored the traffic that is associated with domains (801). A list that associates the volume and visits with domains is updated (803) and if the push procedure is enabled (804), the statistics are sent back to the ingress statistics aggregator (805) If a statistics query is received in the ingress router in the interface with the ingress router aggregator (806) then the requested statistics monitored in the router, e.g. for the most popular domains or all the domains based on visits or volume, are sent back to the ingress router aggregator (805).

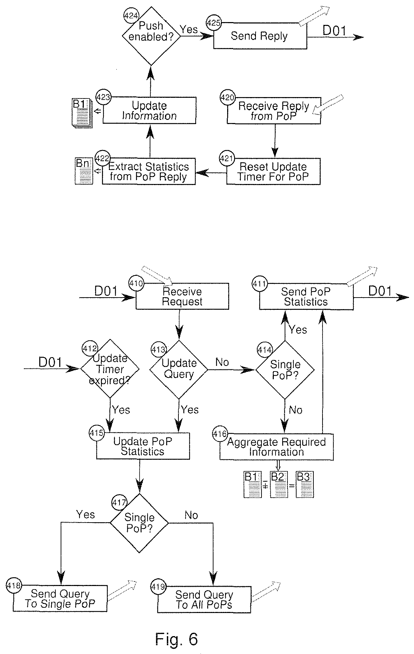

Fig. 6 or diagram D04 shows the Point-of-Present (PoP) statistics aggregator component (006) that is responsible for receiving queries from the network monitor as well as reporting to the network monitor. It also shows how queries are sent to the PoP routers and how replies from PoP routers are received. In particular, Fig. 6 shows the flow of selections in the PoP statistics aggregator component (006) wherein at the top the flow of selections when a reply is received from an PoP router (009) is shown. At the bottom of Fig. 6 it is shown the flow of selections when a request is received in the PoP statistics aggregator from the network monitor and load balancer.

When a reply from a PoP router (009) is received in the interface with the ingress statistics aggregator (420), the update timer for the PoP router is reset (421). Then, the statistics from a PoP router reply are extracted (422) and the monitor information about the PoP router is updated (423). Then it is checked if the report push of updates is enabled (424), and if so then the reply is sent to the network monitor and load balancer (425). When a request is received in the PoP statistics aggregator in the interfaces with the network monitor and load balancer (410), it is checked if the query is an update one (413). If it is not an update then it is checked if the request is for a single PoP router (414). If it is for a single PoP router then the statistics are sent to the network monitor and load balancer (411). If the request is not for a single router then the required information is aggregated (416), and PoP router statistics are sent to the network monitor and load balancer (411). If the query is an update one, then the PoP router statistics are updated (415). For this it is checked if the request is for a single PoP router (417). If it is for a single PoP router then the request is sent to this PoP router (418), or if it is for all the PoP routers then it is sent to all of them (419). Periodically it is checked if the update timer has expired (412), and if so then the PoP router statistics are updated.

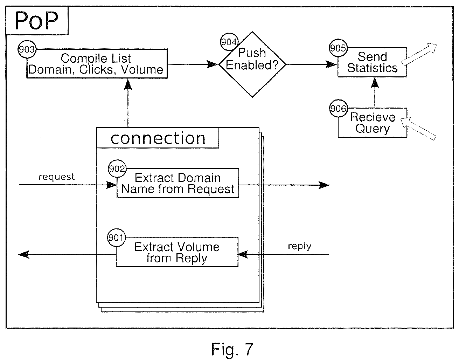

Fig. 7 or diagram D04a, shows the PoP statistics collector from the PoP routers (009) as well as the scheduling mechanism for reporting statistics in the PoP router (009). In particular, Fig. 7 shows the flow of selections in the PoP router element. When a request about content is received in the PoP outer (902) the domain name is extracted from the request and the number of visits associated with the domain is updated (902). From the replies, it is monitored the traffic that is associated with domains (901). A list that associates the volume with domains is updated (903) and if the push procedure is enabled (904), the statistics are sent back to the PoP statistics aggregator (905). If a statistics query is received in the PoP router in the interface with the PoP router aggregator (906) then the requested statistics monitored in the router, e.g. for the most popular domains or all the domains based on visits or volume, are sent back to the PoP router aggregator (905).

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. The invention also covers all further features shown in the Figs. individually although they may not have been described in the afore or following description. Also, single alternatives of the embodiments described in the figures and the description and single alternatives of features thereof can be disclaimed from the subject matter of the invention.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

## Claims

1. Method of engineering traffic within a network performed by the network operator, comprising:
controlling traffic flow through the network being optimized by evaluating interior gateway protocol weights, label switch paths within multiprotocol label switching and/or border gateway protocol properties,
obtaining an ingress point at which content enters the network, and
obtaining an egress point at which content exits the network, wherein the network operator chooses the egress point based on the hostname of a given content request, wherein
within the controlling of the traffic flow through the network requests for content are redirected to appropriate servers by considering the ingress point and the egress point.

2. Method according to claim 1, comprising the step of obtaining location data about a location of a content server within or outside the network wherein the location data is considered when redirecting the requests for content within the controlling of the traffic flow through the network.

3. Method according to claim 2, wherein the location data comprises information about availability of the content server.

4. Method according to claim 2 or 3, wherein the location data comprises information about the content server exchanged with another network being connected to the network.

5. Method according to any one of the preceding claims, comprising collecting popularity data about the popularity of content within the network wherein the popularity data is considered when redirecting the requests for content within the controlling of the traffic flow through the network.

6. Method according to claim 5, wherein the network is divided in a plurality of sections wherein collecting popularity data about the popularity of content within the network comprises collecting popularity data about the popularity of content within each section of the network.

7. Method according to any one of the preceding claims, comprising predefining selected nodes within the network and collecting traffic data at the selected nodes of the network, wherein the traffic data is considered when redirecting the requests for content within the controlling of the traffic flow through the network.

8. Method according to claim 7, wherein the traffic data is collected for selected content.

9. Method according to claim 7 or 8, wherein the traffic data is collected according to a hierarchical structure.

10. Method according to claim 9, wherein components and elements are aggregated when collecting the traffic data.

11. Method according to any one of the preceding claims, comprising querying utilization data about utilization of parts of the network, wherein the utilization data is considered when redirecting the requests for content within the controlling of the traffic flow through the network.

12. Method according to any one of the preceding claims, comprising selecting a subset of servers to deliver content wherein each of the subsets of servers is evaluated when redirecting the requests for content within the controlling of the traffic flow through the network.

13. Method according to any one of the preceding claims, comprising providing a program interface for interaction with program components within the network.

14. Computer program having code means being arranged to implement the method according to any one of the preceding claims when being executed.

## Patentansprüche

1. Verfahren für Netzwerkverkehrstechnik, das durch den Netzwerkbetreiber ausgeführt wird, aufweisend:
Steuern des Verkehrsflusses in dem Netzwerk, das durch Auswerten von Interior Gateway Protocol (IGP) Gewichten, Label Switched Paths innerhalb Multi Protocol Label Switching (MPLS) und/oder Border Gateway Protocol (BGP) Eigenschaften optimiert wird,
Erhalten eines Ingress-Punkts, an dem Content in das Netzwerk eindringt, und
Erhalten eines Egress-Punkts, an dem Content aus dem Netzwerk austritt, wobei der Netzwerkbetreiber den Egress-Punkt basierend auf dem Hostnamen einer bestimmten Content-Abfrage auswählt, wobei
mit dem Steuern des Verkehrsflusses durch das Netzwerk Content-Abfragen an geeignete Server unter Berücksichtigung der Ingress- und Egress-Punkte umgeleitet werden.

2. Verfahren nach Anspruch 1, aufweisend den Schritt zum Erhalten von Standortdaten über einen Standort eines Content-Servers innerhalb oder außerhalb des Netzwerks, wobei die Standortdaten berücksichtigt werden, wenn die Content-Abfragen mit dem Steuern des Verkehrsflusses durch das Netzwerk umgeleitet werden.

3. Verfahren nach Anspruch 2, wobei die Standortdaten Informationen über die Verfügbarkeit des Content-Servers umfassen.

4. Verfahren nach Anspruch 2 oder 3, wobei die Standortdaten Informationen über den Content-Server umfassen, die mit einem anderen Netzwerk, das mit dem Netzwerk verbunden ist, ausgetauscht werden.

5. Verfahren nach einem der vorhergehenden Ansprüche, aufweisend das Sammeln von Beliebtheitsdaten über die Beliebtheit von Content innerhalb des Netzwerks, wobei die Beliebtheitsdaten in Betracht gezogen werden, wenn die Content-Abfragen mit dem Steuern des Verkehrsflusses durch das Netzwerk umgeleitet werden.

6. Verfahren nach Anspruch 5, wobei das Netzwerk in mehrere Bereiche aufgeteilt ist, wobei das Sammeln von Beliebtheitsdaten über die Beliebtheit von Content innerhalb des Netzwerks das Sammeln von Beliebtheitsdaten über die Beliebtheit des Content innerhalb jedes Bereichs des Netzwerks umfasst.

7. Verfahren nach einem der vorhergehenden Ansprüche, aufweisend ein Vordefinieren ausgewählter Knoten innerhalb des Netzwerks und Sammeln von Verkehrsdaten an den ausgewählten Knoten des Netzwerks, wobei die Verkehrsdaten berücksichtigt werden, wenn die Content-Abfragen mit dem Steuern des Verkehrsflusses durch das Netzwerk umgeleitet werden.

8. Verfahren nach Anspruch 7, wobei die Verkehrsdaten für ausgewählten Content gesammelt werden.

9. Verfahren nach Anspruch 7 oder 8, wobei die Verkehrsdaten nach einer hierarchischen Struktur gesammelt werden.

10. Verfahren nach Anspruch 9, wobei Komponenten und Elemente beim Sammeln der Verkehrsdaten aggregiert werden.

11. Verfahren nach einem der vorhergehenden Ansprüche, aufweisend das Anfragen von Nutzungsdaten über die Nutzung von Teilen des Netzwerks, wobei die Nutzungsdaten berücksichtigt werden, wenn die Content-Abfragen mit dem Steuern des Verkehrsflusses durch das Netzwerk umgeleitet werden.

12. Verfahren nach einem der vorhergehenden Ansprüche, aufweisend das Auswählen einer Untergruppe von Servern, um Content zu liefern, wobei jede der Untergruppen von Servern ausgewertet wird, wenn die Content-Abfragen mit dem Steuern des Verkehrsflusses durch das Netzwerk umgeleitet werden.

13. Verfahren nach einem der vorhergehenden Ansprüche, aufweisend das Vorsehen einer Programmschnittstelle für die Interaktion mit Programmkomponenten innerhalb des Netzwerks.

14. Computerprogramm mit Codemitteln, die angeordnet sind, das Verfahren nach einem der vorhergehenden Ansprüche bei der Ausführung zu implementieren.

## Revendications

1. Procédé d'ingénierie de trafic à l'intérieur d'un réseau réalisé par l'opérateur de réseau, comprenant :
la régulation d'un écoulement de trafic dans le réseau qui est optimisé en évaluant des pondérations de protocole de passerelle intérieure, des trajets à commutateur par étiquette en accord avec des propriétés de commutation multiprotocole par étiquette et/ou de protocole de passerelle frontière,
l'obtention d'un point d'entrée au niveau duquel un contenu entre dans le réseau, et
l'obtention d'un point de sortie au niveau duquel un contenu sort du réseau, dans lequel l'opérateur de réseau choisit le point de sortie sur la base du nom d'hôte d'une demande de contenu donnée, dans lequel, en accord avec la régulation de l'écoulement de trafic dans le réseau, des demandes de contenu sont redirigées vers des serveurs appropriés en tenant compte du point d'entrée et du point de sortie.

2. Procédé selon la revendication 1, comprenant l'étape d'obtention de données d'emplacement concernant un emplacement d'un serveur de contenu à l'intérieur ou à l'extérieur du réseau, dans lequel les données d'emplacement sont prises en compte lors de la redirection des demandes de contenu en accord avec la régulation de l'écoulement de trafic dans le réseau.

3. Procédé selon la revendication 2, dans lequel les données d'emplacement comprennent des informations concernant la disponibilité du serveur de contenu.

4. Procédé selon la revendication 2 ou 3, dans lequel les données d'emplacement comprennent des informations concernant le serveur de contenu échangées avec un autre réseau qui est connecté au réseau.

5. Procédé selon l'une quelconque des revendications précédentes, comprenant la collecte de données de popularité concernant la popularité du contenu à l'intérieur du réseau, dans lequel les données de popularité sont prises en compte lors de la redirection des demandes de contenu en accord avec la régulation de l'écoulement de trafic dans le réseau.

6. Procédé selon la revendication 5, dans lequel le réseau est divisé en une pluralité de sections, dans lequel la collecte de données de popularité concernant la popularité du contenu dans le réseau comprend la collecte de données de popularité concernant la popularité du contenu à l'intérieur de chaque section du réseau.

7. Procédé selon l'une quelconque des revendications précédentes, comprenant la définition préalable de noeuds sélectionnés à l'intérieur du réseau et la collecte de données de trafic au niveau des noeuds sélectionnés du réseau, dans lequel les données de trafic sont prises en compte lors de la redirection des demandes de contenu en accord avec la régulation de l'écoulement de trafic dans le réseau.

8. Procédé selon la revendication 7, dans lequel les données de trafic sont collectées pour un contenu sélectionné.

9. Procédé selon la revendication 7 ou 8, dans lequel les données de trafic sont collectées selon une structure hiérarchique.

10. Procédé selon la revendication 9, dans lequel des composants et des éléments sont agrégés lors de la collecte des données de trafic.

11. Procédé selon l'une quelconque des revendications précédentes, comprenant l'interrogation de données d'utilisation concernant l'utilisation de parties du réseau, dans lequel les données d'utilisation sont prises en compte lors de la redirection des demandes de contenu en accord avec la régulation de l'écoulement de trafic dans le réseau.

12. Procédé selon l'une quelconque des revendications précédentes, comprenant la sélection d'un sous-ensemble de serveurs pour délivrer un contenu, dans lequel chacun des sous-ensembles de serveurs est évalué lors de la redirection des demandes de contenu en accord avec la régulation de l'écoulement de trafic dans le réseau.

13. Procédé selon l'une quelconque des revendications précédentes, comprenant la fourniture d'une interface de programme pour une interaction avec des composants de programme à l'intérieur du réseau.

14. Programme d'ordinateur ayant un moyen de code qui est agencé pour implémenter le procédé selon l'une quelconque des revendications précédentes lorsqu'il est exécuté.
